# EUROPEAN PATENT SPECIFICATION

(11) **EP 2 965 976 B1**
(45) Date of publication and mention of the grant of the patent: **24.04.2019**
(21) Application number: 15175116.1
(22) Date of filing: 02.07.2015
(51) Int. Cl.: B62J 6/00, B62K 19/40, B62J 6/02

(54) **MOVABLE ON-VEHICLE DEVICE FOR SADDLE-RIDING TYPE VEHICLE**
BEWEGLICHE ZUBEHÖRVORRICHTUNG FÜR SATTELFAHRZEUG
DISPOSITIF EMBARQUÉ MOBILE POUR UN VÉHICULE DE TYPE À SELLE

(30) Priority: 09.07.2014 JP 2014141335
(43) Date of publication of application: 13.01.2016
(73) Proprietor: KAWASAKI JUKOGYO KABUSHIKI KAISHA, Chuo-ku Kobe-shi Hyogo 650-8670 (JP)
(72) Inventor: TAMURA, Hiroshi, Hyogo 673-8666 (JP); IKEDA, Shinji, Hyogo 673-8666 (JP); SHIBUTA, Yu, Hyogo 673-8666 (JP)
(74) Representative: Porta, Checcacci & Associati S.p.A

(56) References cited:
- WO-A1-2014/091640
- CN-U- 203 549 645
- JP-A- 2003 212 035
- JP-U- S55 127 632
- US-A- 2 457 348
- US-A- 2 791 939

## Description

### BACKGROUND OF THE INVENTION

### (Field of the Invention)

The present invention relates to a movable on-vehicle device, such as an auxiliary lamp, which is mounted to a body of a saddle-riding type vehicle such that an orientation of the device is adjustable around a predetermined first axis and a predetermined second axis.

### (Description of Related Art)

For example, in saddle-riding type vehicles such as motorcycles, auxiliary lamps, in addition to lamps required by regulation, are mounted in some cases such that visibility for riders is assured, or such that the vehicles can be viewed from other traffic vehicle drivers in an improved manner (for example, JP Laid-open Patent Publication No. 2013-252811). The auxiliary lamps include, for example, fog lamps which are lit up when view is obstructed, cornering lamps which are lit up during cornering, and the like.

Such an auxiliary lamp is detachably supported on a vehicle body frame, and the optical axis thereof can be adjusted in two directions, that is, in the up-down direction and the left-right direction or widthwise direction relative to the vehicle body. Therefore, a fastening member with which the lamp is supported on the vehicle body, and two rotation shafts for the optical axis adjustment are required, thereby complicating a structure of the auxiliary lamp. CN203549645 discloses an externally-arranged LED spotlight for a vehicle. The externally-arranged LED spotlight for the vehicle comprises a support and a spotlight housing. The two sides of the spotlight housing are hinged into the support through adjusting bolts. An LED lamp and a driving source are arranged in the spotlight housing. A lens is installed on the front side of the spotlight housing. The beam angle of lamp light can be adjusted by means of releasing the adjusting bolts. A clamping opening formed by a first arch piece and a second arch piece is arranged on the support.US 2,791,939 discloses a vehicle attachable annular shield and a rear view mirror supported therewithin and diametrically thereof. The rear view mirror is so configured that the tubular section 4 is adjustable around the axis of the screw 11 and the pivot 30 provides the adjustment for the mirror 10.

WO 2014/091640 discloses a side mirror for a straddled vehicle, provided with: a mirror stay of which the base end is attached to the body of a two-wheeled automobile (straddled vehicle); and a mirror unit that has a mirror and is provided to the tip end of the mirror stay. The mirror stay has a first stay section and second stay section that divide forked from the base end and extending towards the tip end.

US 2,457,348 discloses a combined signal light and rear view mirror so configured that the mirror and the assembly are adjustable via ball and socket connections.

JP 2003 212035 A discloses a movable on-vehicle device for a saddle-riding vehicle including the features of the preamble of claim 1.

### SUMMARY OF THE INVENTION

An object of the present invention is to provide a movable on-vehicle device, for a saddle-riding type vehicle, which can be supported on a vehicle body and an orientation of which can be adjusted in two directions, in a simple structure.

In order to attain the above object, a movable on-vehicle device for a saddle-riding type vehicle according to the present invention is mounted to a vehicle body of the saddle-riding type vehicle such that an orientation of the movable on-vehicle device is adjustable around a predetermined first axis and a predetermined second axis, wherein the first axis and the second axis are substantially perpendicular to each other. The movable on-vehicle device includes a device body and a cover configured to cover the device body. The cover is detachably mounted by means of a first direction fastening member onto a vehicle body frame side, so as to be adjustable around the first axis. The device body is detachably mounted to the cover by means of a second direction fastening member so as to be adjustable around the second axis. For example, the movable on-vehicle devices include auxiliary lamps such as fog lamps, cornering lamps, and the like.

In the description herein, the term "movable on-vehicle device" means a device, disposed on the outer side of the vehicle body, whose orientation is adjustable. Further, the term "movable" structure includes a structure in which adjustment may be manually performed. Further, the term "vehicle body frame side" includes a vehicle body frame, and members, such as a fairing, a fairing stay, a head lamp stay and the like, supported by the vehicle body frame.

According to the above configuration, the first direction fastening member enables the cover to be supported on the vehicle body frame side, and the movable on-vehicle device to be adjusted around the first axis, and the second direction fastening member enables the device body to be mounted to the cover, and the movable on-vehicle device to be adjusted around the second axis. Thus, the movable on-vehicle device can be supported on the vehicle body, and the orientation thereof can be adjusted in the two directions, in a simple structure. Further, the movable on-vehicle device has the detachable cover that covers the device body. Therefore, even in a case where the cover is damaged, only the cover may be replaced, and the device body can be continuously used. Therefore, the usability of the movable on-vehicle device is enhanced.

In the present invention, it is preferable that the movable on-vehicle device is mounted to an outer side portion, of the vehicle body, in the vehicle widthwise direction, and the cover has an outer side portion positioned on an outer side, of the device body, in the vehicle widthwise direction and an inner side portion positioned on an inner side, of the device body, in the vehicle widthwise direction, in a state where the movable on-vehicle device is mounted to the vehicle body. The outer side portion of the cover may be formed so as to be greater than the inner side portion of the cover, as viewed from a side. According to this configuration, by the outer side portion of the cover being enlarged, the device body can be prevented from contacting with an external obstacle. Further, by the inner side portion of the cover being reduced in size, the weight and the cost of the cover can be reduced.

When the movable on-vehicle device is mounted to the outer side portion, of the vehicle body, in the vehicle widthwise direction, the cover is preferably formed into a vertically symmetric shape in a front view in a state where the cover is mounted to the vehicle body. According to this configuration, by the cover being rotated by 180 degrees around the axis in the front-rear direction or longitudinal direction, the cover can be common in both a case where the movable on-vehicle device is mounted on the right side of the vehicle body and a case where the movable on-vehicle device is mounted on the left side of the vehicle body.

In the present invention, the cover includes two divisional portions that are separable in a direction perpendicular to an axis in a longitudinal direction in a state where the cover is mounted to the vehicle body, and the two divisional portions are preferably joined to each other by either of the first direction fastening member and the second direction fastening member. According to this configuration, joining for the cover is performed also by means of the first direction fastening member and the second direction fastening member, whereby simplifying the structure of the movable on-vehicle device.

The two divisional portions are preferably separable in the vehicle widthwise direction in a state where the cover is mounted to the vehicle body. According to this configuration, a line dividing the cover is not seen from the outer lateral sides of the vehicle body, thereby improving the outward appearance of the vehicle.

The two divisional portions are preferably formed as a first divisional part positioned on an outer side in the vehicle widthwise direction and a second divisional part positioned on an inner side in the vehicle widthwise direction, and the first divisional part and the second divisional part are preferably joined to each other by either of the first direction fastening member and the second direction fastening member in a state where the first divisional part and the second divisional part overlap each other such that a portion of the first divisional part is positioned on an outer side. According to this configuration, the line dividing the cover is positioned closer to the inner side of the vehicle body, whereby the line is less likely to be seen from the outer lateral sides of the vehicle body. Therefore, outward appearance of the vehicle is improved.

In the present invention, it is preferable that the first direction fastening member is fastened in an up-down direction or vertical direction, to detachably mount the cover to the vehicle body, and the first direction fastening member is loosened to adjust the cover, around an axis in the up-down direction, relative to the vehicle body frame, and the second direction fastening member is fastened in a widthwise direction, to detachably mount the device body to the cover, and the second direction fastening member is loosened to adjust the device body, around an axis in the widthwise direction, relative to the cover. According to this configuration, the cover is mounted to the vehicle body by fastening force in the up-down direction, whereby generation of rotational moment around the axis in the longitudinal direction in the cover can be reduced. As a result, rigidity with which the cover is supported on the vehicle body is likely to be assuredly obtained.

In the present invention, the cover preferably covers the entirety of the device body at least in a side view and a planar view. According to this configuration, the device body is not seen from the outside of the vehicle body and a rider riding the vehicle. Thus, outward appearance of the vehicle is improved.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a side view illustrating a front potion of a motorcycle including an auxiliary lamp that is one kind of a movable on-vehicle device according to one preferred embodiment of the present invention;
Fig. 2 is an enlarged side view of a support structure for the auxiliary lamp;
Fig. 3 is a front view of the support structure;
Fig. 4 is a perspective view of the support structure as viewed from the diagonally front-lateral side;
Fig. 5 is an exploded perspective view of the support structure;
Fig. 6 is a front view of a lamp cover for the auxiliary lamp;
Fig. 7 is an exploded perspective view of the lamp cover; and
Fig. 8 is a cross-sectional view of the support structure.

### DESCRIPTION OF PREFERRED EMBODIMENTS

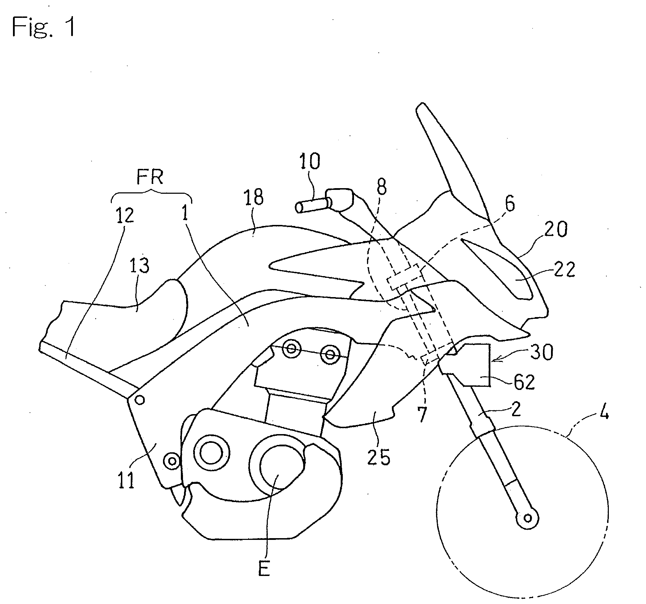

Hereinafter, a preferred embodiment of the present invention will be described with reference to the drawings. In the description herein, the left-right direction represents the left-right direction as viewed from a rider riding a motorcycle. In Fig. 1, the motorcycle of the present invention has a motorcycle frame structure or vehicle body frame FR, and the vehicle body frame FR includes a main frame 1 that forms a front half of the vehicle body frame FR and a rear frame 12 that is joined to the rear portion of the main frame 1 and forms a rear half of the vehicle body frame FR. A front fork 2 is supported at the front end of the main frame 1, and a front wheel 4 is supported at the lower end portion of the front fork 2. The front fork 2 is supported by an upper bracket 6 and a lower bracket 7, and the front fork 2 and these brackets 6, 7 are rotatably supported by a head pipe 8 mounted at the front end of the main frame 1. A steering handle 10 is mounted to the upper bracket 6.

On the other hand, a swing arm bracket 11 is fixed to the lower portion of the rear end of the main frame 1, and a swing arm that supports a rear wheel (not illustrated) is pivotally supported by the swing arm bracket 11 so as to be able to swing. A combustion engine E that is a motor for driving the rear wheel is supported below the center portion of the main frame 1.

A rider seat 13 is supported by the rear frame 12. A fuel tank 18 is supported above the main frame 1, that is, at the upper portion of the motorcycle body or vehicle body and between the head pipe 8 and the rider seat 13.

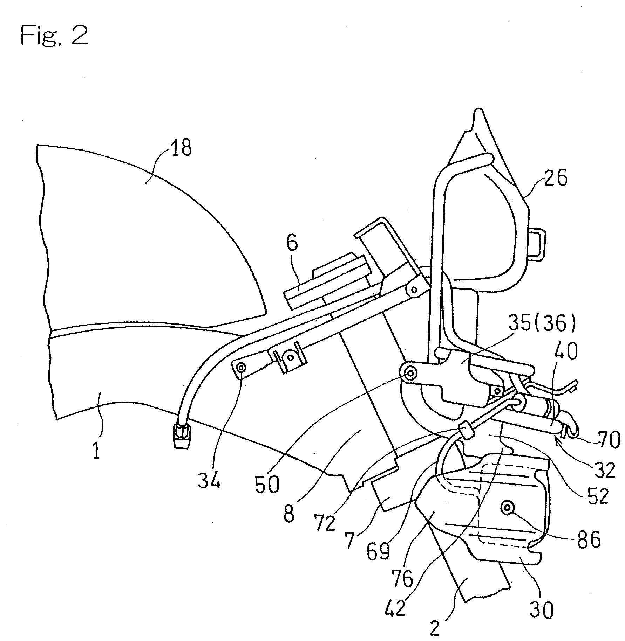

A front fairing 20 made of a resin is mounted in front of the vehicle body frame FR so as to cover a region in front of the head pipe 8, and a head lamp 22 is mounted to the front fairing 20. A side fairing 25 made of a resin is disposed in the rear of the front fairing 20, and covers a range from the outer lateral portion of the head pipe 8 to the outer lateral side in front of the combustion engine E. The side fairing 25 is provided as a pair of left and right side fairings. The front fairing 20 and the side fairings 25 are supported by the main frame 1 through a fairing stay 26 (Fig. 2).

Paired left and right auxiliary lamps 30 which are one kind of a movable on-vehicle device are disposed on both sides, of the motorcycle, in a vehicle widthwise direction, and are supported on the main frame 1. The auxiliary lamps 30 of the present preferred embodiment are fog lamps that are lit up when view is obstructed. However, the auxiliary lamp 30 is not limited thereto, and may be, for example, a cornering lamp which is lit up during cornering. The movable on-vehicle device is an accessory device that is not necessarily required for traveling of vehicles and driving of vehicles, and may be not only the auxiliary lamps 30, but also an on-vehicle camera, a distance measuring sensor, or an on-vehicle antenna. Further, the movable on-vehicle device may be provided as paired left and right devices, or the on-vehicle accessory device may be provided on only one of the left and right sides.

Each auxiliary lamp 30 is disposed on the outer side lateral to the front fork 2 above the front wheel 4 and below the front portion of the side fairing 25 as viewed from the side thereof. The auxiliary lamp 30 is not joined directly to the front fork 2. The auxiliary lamp 30 will be described below in detail.

Figs. 2 to 4 are a side view, a front view, and a perspective view, respectively, of a support structure for the auxiliary lamps 30. As shown in Fig. 2, the auxiliary lamps 30 are mounted through a lamp stay 32 to the fairing stay 26 provided on the vehicle body frame side. In the description herein, the term "vehicle body frame side" includes a member such as the vehicle body frame FR, or the cowl 20, 25 or the fairing stay 26 supported by the vehicle body frame FR, as shown in Fig. 1.

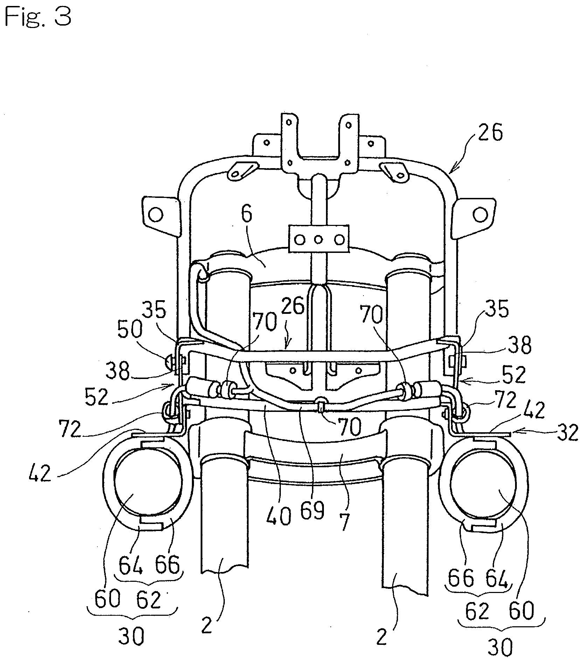

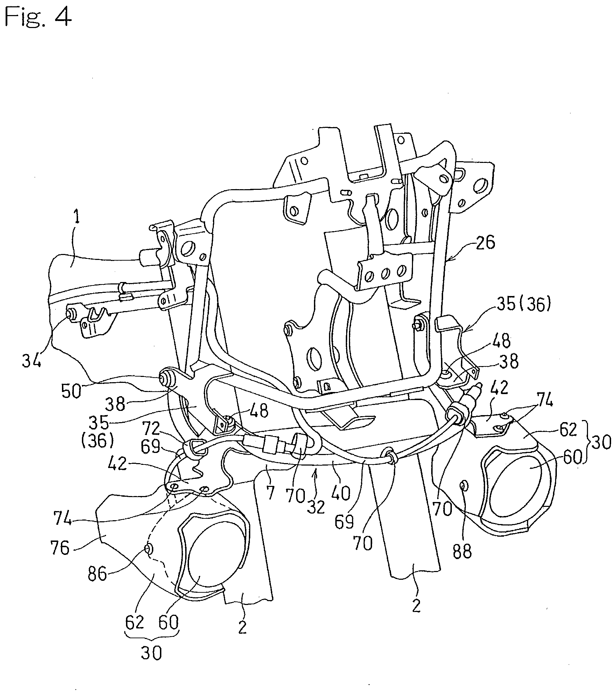

The fairing stay 26 shown in Fig. 2 is supported by the main frame 1 through a plurality of bolts 34, and the fairing stay 26 supports the head lamp 22, the front fairing 20, and the side fairing 25 in a known manner. As shown in Fig. 3, the fairing stay 26 has almost a closed quadrangular shape as viewed from the front thereof. As shown in Fig. 4, first brackets 35 to which the lamp stay 32 is mounted are provided on both sides, of the fairing stay 26, in the vehicle widthwise direction. However, the shape of the fairing stay is not limited thereto, and may be, for example, a shape that is opened forward or rearward.

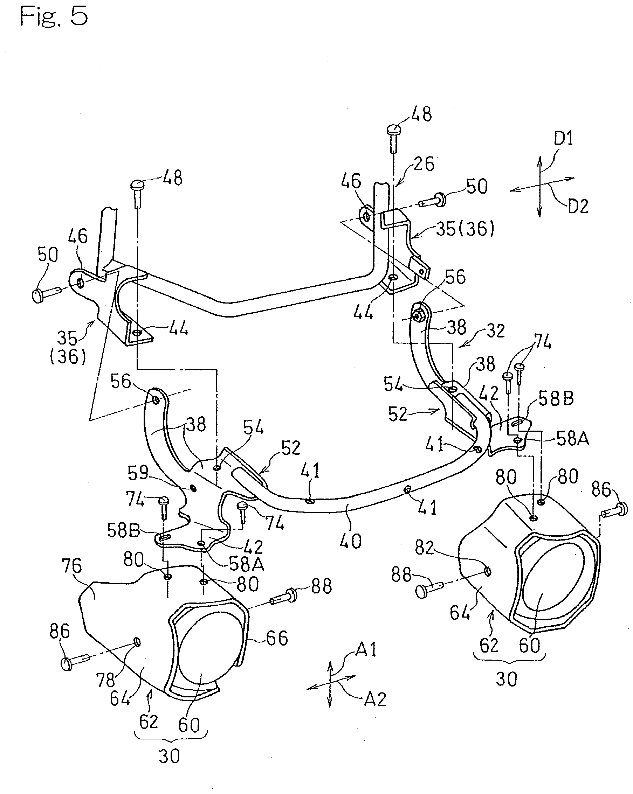

Each first bracket 35 is formed by bending a metal plate material, and is fixed to the lower portion of the fairing stay 26 by means of welding. The first brackets 35 form support portions 36 that support the lamp stay 32. Specifically, as shown in Fig. 5, each support portion 36 has two bolt insertion holes 44, 46 that are spaced from each other in a front-rear direction or a longitudinal direction. The front bolt insertion hole 44 is a through hole that extends almost in the up-down direction, and the rear bolt insertion hole 46 is a through hole that extends almost in the left-right direction (the vehicle widthwise direction).

That is, a first fastening direction (an up-down direction or a vertical direction) D1 in which a first fastening member 48 is inserted into the front bolt insertion hole 44, and a second fastening direction (the vehicle widthwise direction) D2 in which a second fastening member 50 is inserted into the rear bolt insertion hole 46, are almost perpendicular to each other. In the present preferred embodiment, the first and the second fastening members 48, 50 are implemented as bolts.

The lamp stay 32 includes a pair of left and right to-be-supported portions 38, 38 that are supported by the left and right support portions 36, 36, respectively, a cross member 40 that extends in the vehicle widthwise direction and joins the left and right to-be-supported portions 38, 38 to each other, and left and right mounting portions 42, 42 which are jointed to the left and right to-be-supported portions 38, 38, respectively and to which the left and right auxiliary lamps 30, 30 are mounted.

The cross member 40 is formed by curving a metal pipe to a U-shape that is opened rearward. The cross member 40 is disposed below the fairing stay 26 in front of the front fork 2, as shown in Fig. 4. The cross member 40 has a plurality of clamp engagement holes 41. Clamps 70 for fixing a lamp harness 69 shown in Fig. 3 are engaged with the clamp engagement holes 41. In the present preferred embodiment, the number of the clamp engagement holes 41 shown in Fig. 5 is three in total, in which one of the three clamp engagement holes 41 is formed in the center portion, of the cross member 40, in the vehicle widthwise direction, and two of the three clamp engagement holes 41 are formed on both sides, of the cross member 40, in the vehicle widthwise direction. However, the number and the positions of the clamp engagement holes 41 are not limited thereto.

The to-be-supported portion 38 and the mounting portion 42 are formed integrally with a second bracket 52 formed by bending a metal plate material. The paired left and right second brackets 52, 52 are fixed to the rear ends, respectively, of the U-shaped cross member 40 by means of welding. Thus, the to-be-supported portions 38, the mounting portions 42, and the cross member 40 are integrally formed by means of welding. The to-be-supported portions 38, the mounting portions 42, and the cross member 40 may be integrally formed by means of press-forming.

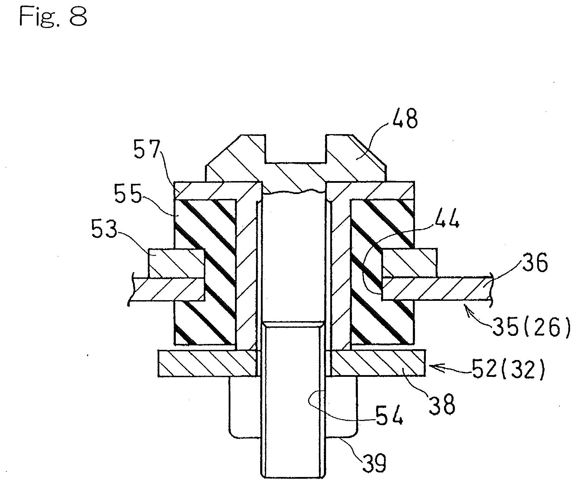

Specifically, the to-be-supported portion 38 is formed in the upper portion of each second bracket 52, and the mounting portion 42 is formed in the lower portion of each second bracket 52. Each to-be-supported portion 38 has two screw holes 54, 56 that are spaced from each other in the longitudinal direction so as to correspond to the two bolt insertion holes 44, 46 of the corresponding support portion 36. That is, the front screw hole 54 is a screw hole that extends in the up-down direction, and the rear screw hole 56 is a screw hole that extends in the left-right direction (vehicle widthwise direction). In the preferred present embodiment, the screw holes 54, 56 are formed as welding nuts 39 (Fig. 8) fixed to the to-be-supported portions 38. The support portions 36 and the to-be-supported portions 38 are covered by the front fairing 20 (Fig. 1) from the outer sides in the vehicle widthwise direction.

A support structure of the support portions 36 in the fairing stay 26 and the to-be-supported portions 38 of the lamp stay 32 is formed by s rubber mount. Specifically, as shown in Fig. 8, a cylindrical vibro-isolating elastic member 55 such as a grommet is press-fitted into the bolt insertion hole 44 of each support portion 36, and a cylindrical collar 57 having a flange on one end thereof is inserted into a hollow portion of the elastic member 55 for vibro-isolation. In Fig. 8, a disk-shaped spacer 53 is interposed between the support portion 36 and the elastic member 55. However, the spacer 53 may not be provided.

The first fastening member 48 is inserted into a hollow portion of the collar 57, and is then fastened into the screw hole 54, of the to-be-supported portion 38, formed as the welding nut. Although Fig. 8 shows the support portion 36 and the to-be-supported portion 38 on the front side, the support portion 36 and the to-be-supported portion 38 on the rear side also have the same structure. Thus, the auxiliary lamps 30 shown in Fig. 5 are supported on the vehicle body frame FR through the vibro-isolating elastic member 55 (Fig. 8), specifically, through the lamp stay 32, the elastic member 55 (Fig. 8), and the fairing stay 26.

In the present preferred embodiment, each to-be-supported portion 38 is detachably supported by the support portion 36 through the two fastening members, that is, the first and the second fastening members 48, 50 at positions distant from each other in the longitudinal direction. However, each to-be-supported portion 38 may be detachably supported by the support portion 36 through two or more fastening members. In this case, a fastening direction for at least one of the two or more fastening members may be different from a fastening direction for the other of the fastening members. Thus, the plurality of to-be-supported portions 38 are spaced from each other in the longitudinal direction on both the left and right sides, thereby enhancing rigidity for the supporting.

Each mounting portion 42 has two bolt insertion holes 58A, 58B that extend in the up-down direction. One of the bolt insertion holes 58A, 58B is a long hole or oval hole that is elongated in the vehicle widthwise direction, and the other thereof is a round hole. In the present preferred embodiment, the bolt insertion hole 58B on the rear side is an oval hole, and the bolt insertion hole 58A on the front side is a round hole. Up-down direction fastening members 74 are inserted into the bolt insertion holes 58A, 58B so as to mount the auxiliary lamps 30 to the mounting portions 42, respectively. A clamp engagement hole 59 that extends in the vehicle widthwise direction is formed between the to-be-supported portion 38 and the mounting portion 42 of each second bracket 52. A clamp 72 for fixing the lamp harness 69 as shown in Fig. 2 is engaged with the clamp engagement hole 59.

In the example shown in Fig. 5, the mounting portion 42 and the to-be-supported portion 38 are formed in the same second bracket 52. However, the mounting portion 42 and the to-be-supported portion 38 may be formed as separate members. In this case, the mounting portions 42 may be joined to the cross member 40 instead of the to-be-supported portions 38.

Each auxiliary lamp 30 shown in Fig. 4 includes a lamp device 60 that is a device body, and a lamp cover 62 which is made of a resin and covers the lamp device 60. In the present preferred embodiment, the lamp cover 62 covers the entirety of the upper side, lower side, and both the left and right sides of the lamp device 60. However, the lamp cover 62 may cover the entirety of the lamp device 60 in at least a side view and a planar view.

The lamp device 60 of the present preferred embodiment has a light emitter (not shown) that includes an LED, and has a heat sink (not shown) at the rear end portion thereof . The lamp harness 69 that extends toward the vehicle body is connected to the rear end of each lamp device 60. The lamp harness 69 is engaged with and fixed by the clamps 70 of the cross member 40 and the clamp 72 of each second bracket 52, and then extends toward the rear portion of the vehicle body, to be finally connected to a control unit (not shown) for performing electronic control of the entirety of the vehicle.

The lamp cover 62 has an outer side portion positioned on the outer side, of the lamp device 60, in the vehicle widthwise direction, and an inner side portion positioned on the inner side, of the lamp device 60, in the vehicle widthwise direction in a state where the lamp cover 62 is mounted to the vehicle body. The outer side portion is formed so as to be greater than the inner side portion as viewed from the side. In other words, an extending portion 76 that extends rearward is formed on an outer wall, of the lamp cover 62, which covers an outer side portion of the lamp device 60. Thus, the heat sinks of the lamp devices 60 and connecting portions where the lamp harness 69 is connected to the lamp devices 60 are not seen when viewed from the side as shown in Fig. 2, thereby improving an outward appearance of the vehicle.

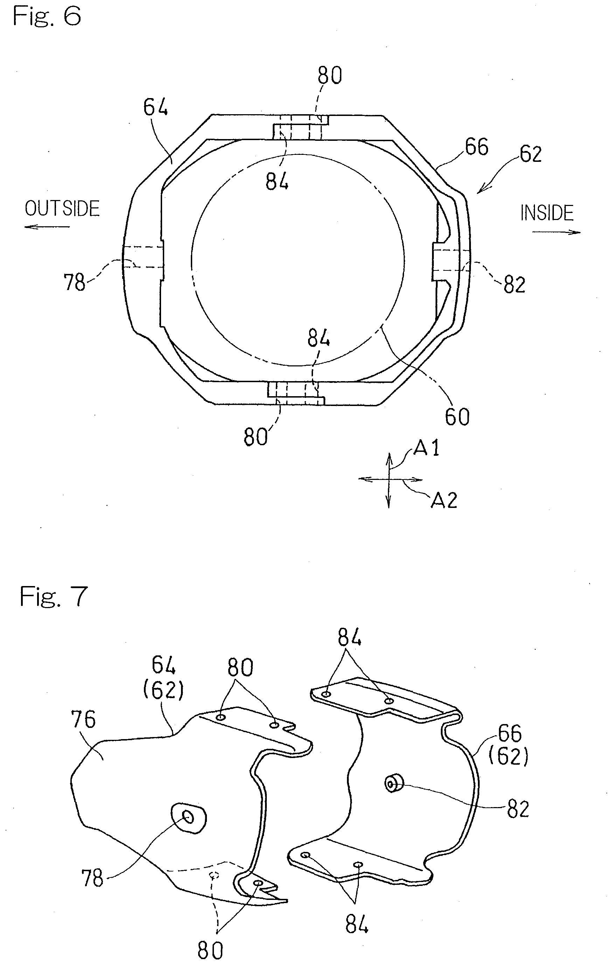

Fig. 6 is a front view of the lamp cover 62 of the auxiliary lamp 30 on the right side. As shown in Fig. 6, the lamp cover 62 has a structure in which the lamp cover 62 is divided into two portions, that is, left and right portions, so as to form two divisional parts 64, 66 that are separable in the left-right direction (the vehicle widthwise direction). Specifically, the two divisional parts are formed as an outer cover half 64 that is a first divisional part disposed on the outer side in the vehicle widthwise direction, and an inner cover half 66 that is a second divisional part disposed on the inner side in the vehicle widthwise direction. The outer cover half 64 and the inner cover half 66 are joined by the up-down direction fastening members 74 (Fig. 4) from the up-down direction in a state where the outer cover half 64 and the inner cover half 66 overlap each other such that a portion of the outer cover half 64 is positioned on the outer side in the up-down direction. Thus, the two divisional parts 64, 66 are joined to each other at a portion where the two divisional parts 64, 66 overlap each other, thereby enhancing rigidity in the joining portion.

The lamp cover 62 is formed into a vertically symmetric shape as viewed from the front thereof. In other words, the left and right lamp covers 62, 62 are formed into shapes that are horizontally symmetric with respect to the center line in the vehicle widthwise direction. Specifically, both the cover halves 64, 66 have the same shape and are disposed so as to be vertically inverted to each other, as shown in Fig. 7. That is, the vertically inverted shape of the right lamp cover 62 corresponds to the shape of the left lamp cover 62. As shown in Fig. 5, an outer lamp body mounting hole 78 is formed on an outer side wall of the outer cover half 64 of the lamp cover 62. The outer lamp body mounting hole 78 is in the form of a through hole that extends in the vehicle widthwise direction. The outer cover half 64 has an upper wall and a lower wall, and each of the upper wall and the lower wall has two connection holes 80 formed as through holes that extend in the up-down direction.

An inner lamp body mounting hole 82 is formed on an inner side wall of the inner cover half 66 of the lamp cover 62. The inner lamp body mounting hole 82 is in the form of a through hole that extends in the vehicle widthwise direction. The inner cover half 66 shown in Fig. 6 has an upper wall and a lower wall, and each of the upper wall and the lower wall has screw holes 84 that extend in the up-down direction, at positions corresponding to the connection holes 80 of the outer cover half 64. The screw holes 84 of the present preferred embodiment are formed as insert nuts.

An outer fastening member 86 formed as a bolt shown in Fig. 5 is inserted into the outer lamp body mounting hole 78 of the outer cover half 64 from the outer lateral side, and is then fastened into a screw hole (not shown) formed in the lamp device 60. Further, an inner fastening member 88 formed as a bolt is inserted into the inner lamp body mounting hole 82 of the inner cover half 66 from the inner side, and is then fastened into a screw hole (not shown) formed in the lamp device 60. Thus, the lamp devices 60 are mounted to the lamp covers 62.

The auxiliary lamps 30 are each mounted to the vehicle body such that the orientation thereof is adjustable around a predetermined first axis A1 and a predetermined second axis A2. In the present preferred embodiment, the first axis A1 extends in the up-down direction, and the second axis A2 extends in the left-right direction (the vehicle widthwise direction). However, directions of the first axis A1 and the second axis A2 are not limited thereto. Specifically, the lamp cover 62 of each auxiliary lamp 30 is detachably mounted onto the vehicle body frame side by means of the up-down direction fastening members 74 so as to be adjustable around the first axis A1. Further, each lamp device 60 is detachably mounted to the lamp cover 62 by means of the outer and the inner fastening members 86, 88 so as to be adjustable around the second axis A2.

That is, the up-down direction fastening members 74 are fastened in the up-down direction to detachably mount the lamp cover 62 to the vehicle body, and the up-down direction fastening members 74 are loosened to adjust the lamp cover 62 around the axis (the first axis A1) in the up-down direction relative to the vehicle body frame FR. Thus, the up-down direction fastening member 74 has three roles of mounting the auxiliary lamp 30 to the mounting portion 42, joining the outer and the inner cover halves 64, 66 to each other, and adjusting the optical axis of the auxiliary lamp 30 around the axis A1 in the up-down direction.

The optical axis of each auxiliary lamp 30 is adjusted around the axis A1 in the up-down direction by combination of the long hole and the fastening members. Specifically, the two up-down direction fastening members 74 are loosened, and the auxiliary lamp 30 is rotated around the front-side up-down direction fastening member 74 which serves as the rotation axis. The rear bolt insertion hole 58B is formed as the long hole, and the rear-side up-down direction fastening member 74 is thus guided by the long hole, to be moved. In such a simple structure, both mounting of the auxiliary lamp 30 and adjustment of the optical axis can be performed. The rear bolt insertion hole 58B formed as the long hole preferably has a shape of an arc of a circle in which the center is the rotation axis of the front-side up-down direction fastening member 74.

The outer and the inner fastening members 86, 88 are fastened in the vehicle widthwise direction to detachably mount the lamp device 60 to the lamp cover 62, and the outer and the inner fastening members 86, 88 are loosened to adjust the lamp device 60 around the axis (the second axis A2) in the vehicle widthwise direction relative to the lamp cover 62. Thus, the outer and the inner fastening members 86, 88 enable both mounting of the lamp device 60 to the lamp cover 62, and adjusting of the optical axis of the auxiliary lamp 30 around the axis A2 in the vehicle widthwise direction.

In the present preferred embodiment, the lamp cover 62 includes two divisional parts 64, 66 that are separable in the left-right direction (the vehicle widthwise direction). However, the lamp cover 62 may be formed as two divisional parts that are separable in a direction corresponding to a direction perpendicular to the axis in the longitudinal direction in a state where the lamp cover 62 is mounted to the vehicle body. Further, the two divisional parts may be joined to each other by either the up-down direction fastening members 74 or the outer and the inner fastening members 86, 88.

In the above structure, the paired left and right to-be-supported portions 38 are joined by the cross member 40 that extends in the vehicle widthwise direction, and the auxiliary lamps 30 are mounted to the mounting portions 42 formed integrally with the to-be-supported portions 38. Therefore, the cross member 40 allows the auxiliary lamps 30 to be stably supported, and undesired vibration of the auxiliary lamps 30 can be reduced.

The auxiliary lamps 30 are supported by the fairing stay 26 through the elastic member 55 shown in Fig. 8. Thus, transmission of vibration of the vehicle body or the combustion engine E shown in Fig. 1 through the main frame 1 to the auxiliary lamps 30 is reduced, whereby generation of undesired vibration in the auxiliary lamps 30 can be reduced with enhanced effectiveness.

Each to-be-supported portion 38 shown in Fig. 4 is detachably supported by the support portion 36 through the two fastening members, that is, the first and the second fastening members 48, 50, and the first fastening direction D1 for the first fastening member 48 and the second fastening direction D2 for the second fastening member 50 are perpendicular to each other. In the case of a rubber mount, rigidity for the supporting in the direction different from the fastening direction may be reduced. However, in the above structure, the to-be-supported portions 38 are supported with the use of the two fastening members 48, 50 which are different in the fastening direction. Therefore, while reduction in rigidity for supporting can be suppressed, undesired vibration of the auxiliary lamps 30 can be reduced.

Further, since the first fastening direction D1 and the second fastening direction D2 are perpendicular to each other, the four fastening portions are spaced from each other on an outline of a quadrangular shape, thereby stably supporting the auxiliary lamps 30.

Further, the to-be-supported portions 38 and the support portions 36 are covered by the front fairing 20 and the side fairing 25 shown in Fig. 1 from the outer side in the vehicle widthwise direction. Therefore, the to-be-supported portions 38 and the support portions 36 are not seen from the outer side, improving an outward appearance of the vehicle.

The cross member 40 shown in Fig. 4 is disposed below the fairing stay 26 and in front of the front fork 2, and is formed into a U-shape that is opened rearward, in a planar view. Therefore, the cross member 40 can be disposed so as to avoid interference with the front fork 2.

Moreover, the up-down direction fastening members 74 enable the lamp covers 62 to be supported on the vehicle body frame side, and the auxiliary lamps 30 to be adjusted around the first axis A1, and the outer and the inner fastening members 86, 88 enable the lamp devices 60 to be mounted to the lamp covers 62, and the auxiliary lamps 30 to be adjusted around the second axis A2. Thus, the auxiliary lamps 30 can be supported on the vehicle body, and the orientation thereof can be adjusted in the two directions, in a simple structure. Further, each auxiliary lamp 30 has the detachable lamp cover 62 that covers the lamp device 60. Therefore, even in a case where the lamp cover 62 is damaged, only the lamp cover 62 may be replaced, and the lamp device 60 can be continuously used. Therefore, the usability of the auxiliary lamps 30 is enhanced.

The outer side portion of each lamp cover 62 positioned on the outer side, of the lamp device 60, in the vehicle widthwise direction is formed so as to be greater than the inner side portion of the lamp cover 62 positioned on the inner side, of the lamp device 60, in the vehicle widthwise direction, as viewed from the side. By the outer side portion of the lamp cover 62 being enlarged, the lamp device 60 can be prevented from contacting with an external obstacle. Further, by the inner side portion of the lamp cover 62 being reduced in size, the weight and the cost of the lamp cover 62 can be reduced.

The lamp cover 62 shown in Fig. 6 is formed into a vertically symmetric shape as viewed from the front thereof. Therefore, by the cover being rotated by 180 degrees around the axis in the longitudinal direction, the lamp cover 62 can be common in both a case where the auxiliary lamp 30 is mounted on the right side of the vehicle body and a case where the auxiliary lamp 30 is mounted on the left side of the vehicle body.

Further, each lamp cover 62 is formed as the outer and the inner cover halves 64, 66 that are separable in the vehicle widthwise direction, and the outer and the inner cover halves 64, 66 are joined to each other by means of the up-down direction fastening members 74 shown in Fig. 4. Thus, the outer and the inner cover halves 64, 66 are joined to each other also by means of the up-down direction fastening members 74, whereby simplifying the structure of the auxiliary lamps 30.

Each lamp cover 62 is formed as the outer and the inner cover halves 64, 66 that are separable in the vehicle widthwise direction, whereby a line dividing the lamp cover 62 is not seen from the outer lateral sides of the vehicle body. Therefore, the outward appearance of the vehicle is improved.

In a state where the outer and the inner cover halves 64, 66 overlap each other such that a portion of the outer cover half 64 is put on the outer side, the outer and the inner cover halves 64, 66 are joined to each other by means of the up-down direction fastening members 74. Thus, the line dividing the lamp cover 62 is positioned closer to the inner side of the vehicle body, whereby such a dividing line is less likely to be seen from the outer lateral sides of the vehicle body. Therefore, outward appearance of the vehicle is improved.

Further, since the lamp covers 62 are mounted to the vehicle body by fastening force in the up-down direction D1, generation of rotational moment around the axis in the longitudinal direction in the lamp covers 62 can be reduced. As a result, rigidity with which the lamp covers 62 are supported on the vehicle body is likely to be assuredly obtained.

Each lamp cover 62 covers the entirety of the lamp device 60 at least in a side view and a planer view. Therefore, the lamp devices 60 are not seen from the outside of the vehicle body and a rider riding the vehicle. Thus, outward appearance of the vehicle is improved.

The present invention is applicable to saddle-riding type vehicles such as three-wheeled vehicles and four-wheeled buggies as well as motorcycles. Further, a driving source for the saddle-riding type vehicles is not limited to an engine, and may be, for example, an electric motor.

### Reference Numerals

26 ···· fairing stay (vehicle body frame side)
30 ···· auxiliary lamp (movable on-vehicle device)
60 ···· lamp device (device body)
62 ···· lamp cover (cover)
64 ···· outer cover half (first divisional part)
66 ···· inner cover half (second divisional part)
74 ···· up-down direction fastening member (first direction fastening member)
86 ···· outer fastening member (second direction fastening member)
88 ···· inner fastening member (second direction fastening member)
A1 ···· axis in up-down direction (first axis)
A2 ···· axis in widthwise direction (second axis)

## Claims

1. A movable on-vehicle device (30), for a saddle-riding type vehicle, adapted to be mounted to a vehicle body such that an orientation of the movable on-vehicle device (30) is adjustable around a predetermined first axis (A1) and a predetermined second axis (A2), the movable on-vehicle device (30) comprising:
a device body (60); and
a cover (62) configured to cover the device body (60),
wherein
the cover (62) is detachably mounted by means of a first direction fastening member (74) extending along the first axis (A1) onto a vehicle body frame side (26), so as to be adjustable around the first axis (A1),
the device body (60) is detachably mounted to the cover by means of a second direction fastening member (86,88) extending along the second axis (A2) so as to be adjustable around the second axis (A2), and
the first axis (A1) and the second axis (A2) are substantially perpendicular to each other,
**characterized by** the fact that
the cover (62) includes two divisional portions that are separable in a direction perpendicular to an axis in a longitudinal direction in a state where the cover (62) is mounted to the vehicle body, and
the two divisional portions are joined to each other by either of the first direction fastening member (74) and the second direction fastening member (86,88).

2. The movable on-vehicle device (30) for the saddle-riding type vehicle as claimed in claim 1, wherein
the movable on-vehicle device (30) is adapted to be mounted onto an outer side, of the vehicle body, in a vehicle widthwise direction, and
the cover (62) has an outer side portion positioned on an outer side, of the device body (60), in the vehicle body widthwise direction, and an inner side portion positioned on an inner side, of the device body (60), in the vehicle widthwise direction, in a state where the movable on-vehicle device is mounted to the vehicle body, and
the outer side portion of the cover (62) is formed so as to be greater than the inner side portion of the cover (60), as viewed from a side.

3. The movable on-vehicle device (30) for the saddle-riding type vehicle as claimed in claim 2, wherein the cover (62) is formed into a vertically symmetric shape in a front view in a state where the cover (62) is mounted to the vehicle body.

4. The movable on-vehicle device (30) for the saddle-riding type vehicle as claimed in claim 1, wherein the two divisional portions are separable in the vehicle widthwise direction in a state where the cover (62) is mounted to the vehicle body.

5. The movable on-vehicle device (30) for the saddle-riding type vehicle as claimed in claim 4, wherein
the two divisional portions are formed as a first divisional part positioned on an outer side in the vehicle widthwise direction and a second divisional part positioned on an inner side in the vehicle widthwise direction, and
the first divisional part and the second divisional part are joined to each other by either of the first direction fastening member (74) and the second direction fastening member (86,88) in a state where the first divisional part and the second divisional part overlap each other such that a portion of the first divisional part is positioned on an outer side.

6. The movable on-vehicle device (30) for the saddle-riding type vehicle as claimed in any one of claims 1 to 5, wherein
the first direction fastening member (74) is adapted to be fastened in an up-down direction, to detachably mount the cover (62) to the vehicle body, and the first direction fastening member (74) is adapted to be loosened to adjust the cover (62), around an axis in the up-down direction, relative to the vehicle body frame (FR), and
the second direction fastening member (86,88) is adapted to be fastened in a widthwise direction, to detachably mount the device body to the cover (62), and the second direction fastening member (86,88) is adapted to be loosened to adjust the device body (60), around an axis in the widthwise direction, relative to the cover (62).

7. The movable on-vehicle device (30) for the saddle-riding type vehicle as claimed in any one of claims 1 to 6, wherein the cover (62) covers the entirety of the device body (60) at least in a side view and a planar view.

8. The movable on-vehicle device (30) for the saddle-riding type vehicle as claimed in any one of claims 1 to 8, wherein the movable on-vehicle device (30) is an auxiliary lamp adapted to be disposed on each of left and right sides of the vehicle body.

9. The movable on-vehicle device (30) for the saddle-riding type vehicle as claimed in claim 6, wherein the first direction fastening member (74) is adapted to be inserted from above.

## Patentansprüche

1. Eine bewegliche Vorrichtung am Fahrzeug (30) für ein Fahrzeug vom Sattelfahrtyp, so angepasst, dass sie so an einem Fahrzeugkörper montiert werden kann, dass eine Ausrichtung der beweglichen Vorrichtung am Fahrzeug (30) um eine vorbestimmte erste Achse (A1) und eine vorbestimmte zweite Achse (A2) verstellbar ist, die bewegliche Vorrichtung am Fahrzeug (30) umfassend:
einen Vorrichtungskörper (60) und
eine Abdeckung (62), konfiguriert zum Abdecken des Vorrichtungskörpers (60),
wobei
die Abdeckung (62) mittels eines ersten direktionalen Befestigungselements (74), das sich entlang der ersten Achse (A1) ausdehnt, abnehmbar auf einer Fahrzeugkörperrahmenseite (26) montiert ist, so dass sie um die erste Achse (A1) verstellbar ist,
der Vorrichtungskörper (60) mittels eines zweiten direktionalen Befestigungselements (86,88), das sich entlang der zweiten Achse (A2) ausdehnt, abnehmbar auf der Abdeckung montiert ist, so dass er um die zweite Achse (A2) verstellbar ist, und
die erste Achse (A1) und die zweite Achse (A2) im Wesentlichen senkrecht zu einander sind,
**dadurch gekennzeichnet, dass**
die Abdeckung (62) zwei teilende Abschnitte umfasst, die in einer Richtung senkrecht zu einer Achse in Längsrichtung in einem Zustand getrennt werden können, in dem die Abdeckung (62) am Fahrzeugkörper montiert ist, und
die zwei teilenden Abschnitte jeweils durch das erste direktionale Befestigungselement (74) und das zweite direktionale Befestigungselement (86,88) mit einander verbunden sind.

2. Die bewegliche Vorrichtung am Fahrzeug (30) für das Fahrzeug vom Sattelfahrtyp nach Anspruch 1, wobei
die bewegliche Vorrichtung am Fahrzeug (30) so angepasst ist, dass sie an einer Außenseite des Fahrzeugkörpers in Breitenrichtung des Fahrzeugs montiert werden kann und
die Abdeckung (62) einen Außenseitenabschnitt hat, der an einer Außenseite des Vorrichtungskörpers (60) in der Breitenrichtung des Fahrzeugkörpers positioniert ist, und einen Innenseitenabschnitt hat, der an einer Innenseite des Vorrichtungskörpers (60) in der Breitenrichtung des Fahrzeugs positioniert ist, in einem Zustand, in dem die bewegliche Vorrichtung am Fahrzeug am Fahrzeugkörper montiert ist, und
der Außenseitenabschnitt der Abdeckung (62) so ausgebildet ist, dass er, von der Seite betrachtet, größer als der Innenseitenabschnitt der Abdeckung (60) ist.

3. Die bewegliche Vorrichtung am Fahrzeug (30) für das Fahrzeug vom Sattelfahrtyp nach Anspruch 2, wobei die Abdeckung (62) in einer Vorderansicht in einer vertikal symmetrischen Form ausgebildet ist, in einem Zustand, in dem die Abdeckung (62) am Fahrzeugkörper montiert ist.

4. Die bewegliche Vorrichtung am Fahrzeug (30) für das Fahrzeug vom Sattelfahrtyp nach Anspruch 1, wobei die zwei teilenden Abschnitte in der Breitenrichtung des Fahrzeugs getrennt werden können, in einem Zustand, in dem die Abdeckung (62) am Fahrzeugkörper montiert ist.

5. Die bewegliche Vorrichtung am Fahrzeug (30) für das Fahrzeug vom Sattelfahrtyp nach Anspruch 4, wobei
die zwei teilenden Abschnitte als ein erstes teilendes Teil positioniert an der Außenseite entlang der Breitenrichtung des Fahrzeugs und ein zweites teilendes Teil positioniert an einer Innenseite entlang der Breitenrichtung des Fahrzeugs ausgebildet sind, und
das erste teilende Teil und das zweite teilende Teil jeweils durch das erste direktionale Befestigungselement (74) und das zweite direktionale Befestigungselement (86,88) mit einander verbunden sind, in einem Zustand, in dem das erste teilende Teil und das zweite teilende Teil einander so überlappen, dass ein Abschnitt des ersten teilenden Teils auf einer Außenseite positioniert ist.

6. Die bewegliche Vorrichtung am Fahrzeug (30) für das Fahrzeug vom Sattelfahrtyp nach einem der Ansprüche 1 bis 5, wobei
das erste direktionale Befestigungselement (74) so angepasst ist, dass es in einer Richtung von oben nach unten befestigt werden kann, um die Abdeckung (62) abnehmbar am Fahrzeugkörper zu montieren, und das erste direktionale Befestigungselement (74) so angepasst ist, dass es gelöst werden kann, um die Abdeckung (62) um eine Achse in der Richtung von oben nach unten relativ zum Fahrzeugkörperrahmen (FR) zu verstellen, und
das zweite direktionale Befestigungselement (86,88) so angepasst ist, dass es in Breitenrichtung befestigt werden kann, um den Vorrichtungskörper abnehmbar an der Abdeckung (62) zu montieren, und das zweite direktionale Befestigungselement (86,88) so angepasst ist, dass es gelöst werden kann, um den Vorrichtungskörper (60) um eine Achse in der Breitenrichtung relativ zur Abdeckung (62) zu verstellen.

7. Die bewegliche Vorrichtung am Fahrzeug (30) für das Fahrzeug vom Sattelfahrtyp nach einem der Ansprüche 1 bis 6, wobei die Abdeckung (62) die Gesamtheit des Vorrichtungskörpers (60) zumindest in der Seitenansicht und der planaren Ansicht abdeckt.

8. Die bewegliche Vorrichtung am Fahrzeug (30) für das Fahrzeug vom Sattelfahrtyp nach einem der Ansprüche 1 bis 8, wobei die bewegliche Vorrichtung am Fahrzeug (30) eine Zusatzlampe ist, die so angepasst ist, dass sie an jeder der linken und rechten Seite des Fahrzeugkörpers angebracht werden kann.

9. Die bewegliche Vorrichtung am Fahrzeug (30) für das Fahrzeug vom Sattelfahrtyp nach Anspruch 6, wobei das erste direktionale Befestigungselement (74) so angepasst ist, dass es von oben eingefügt werden kann.

## Revendications

1. Dispositif embarqué mobile (30), pour un véhicule du type à selle, adapté pour être monté sur la carrosserie d'un véhicule, de sorte qu'une orientation du dispositif embarqué mobile (30) puisse être ajustée autour d'un premier axe prédéterminé (A1) et d'un second axe prédéterminé (A2), le dispositif embarqué mobile (30) comprenant :
un corps de dispositif (60) ; et
un couvercle (62) configuré pour recouvrir le corps de dispositif (60),
dans lequel
le couvercle (62) est monté de manière amovible au moyen d'un élément de fixation de première direction (74) qui s'étend le long du premier axe (A1) sur un côté du châssis de carrosserie du véhicule (26), de manière à pouvoir être ajusté autour du premier axe (A1),
le corps de dispositif (60) est monté de manière amovible sur le couvercle au moyen d'un élément de fixation de deuxième direction (86, 88) qui s'étend le long du second axe (A2) de manière à pouvoir être ajusté autour du second axe (A2), et
le premier axe (A1) et le second axe (A2) sont sensiblement perpendiculaires l'un à l'autre,
**caractérisé par le fait que**
le couvercle (62) comprend deux parties divisées qui sont séparables dans une direction perpendiculaire à un axe, dans une direction longitudinale, dans un état où le couvercle (62) est monté sur la carrosserie du véhicule, et
les deux parties divisées sont reliées l'une à l'autre soit par l'élément de fixation de première direction (74) soit par l'élément de fixation de deuxième direction (86, 58).

2. Dispositif embarqué mobile (30) pour véhicule du type à selle selon la revendication 1, dans lequel
le dispositif embarqué mobile (30) est adapté pour être monté sur un côté extérieur de la carrosserie du véhicule, dans le sens de la largeur du véhicule, et
le couvercle (62) présente une partie latérale extérieure positionnée sur un côté extérieur du corps du dispositif (60), dans le sens de la largeur du corps du véhicule, et une partie latérale intérieure positionnée sur un côté intérieur du corps du dispositif (60), dans le sens de la largeur du véhicule, dans un état où le dispositif embarqué mobile est monté sur la carrosserie du véhicule, et
la partie latérale extérieure du couvercle (62) est formée de manière à être plus grande que la partie latérale intérieure du couvercle (60), vue de côté.

3. Dispositif embarqué mobile (30) pour véhicule du type à selle selon la revendication 2, dans lequel le couvercle (62) est formé dans une forme symétrique verticale, dans une vue de face, dans un état où le couvercle (62) est monté sur la carrosserie du véhicule.

4. Dispositif embarqué mobile (30) pour véhicule du type à selle selon la revendication 1, dans lequel les deux parties divisées sont séparables dans le sens de la largeur du véhicule, dans un état où le couvercle (62) est monté sur la carrosserie du véhicule.

5. Dispositif embarqué mobile (30) pour véhicule du type à selle selon la revendication 4, dans lequel
les deux parties divisées sont formées comme une première partie divisée positionnée sur un côté extérieur dans le sens de la largeur du véhicule et une seconde partie divisée placée sur un côté intérieur dans le sens de la largeur du véhicule, et
la première partie divisée et la seconde partie divisée sont reliées l'une à l'autre soit par l'élément de fixation de première direction (74) soit par l'élément de fixation de deuxième direction (86, 88) dans un état où la première partie divisée et la seconde partie divisée se chevauchent l'une l'autre de sorte qu'une partie de la première partie divisée soit positionnée sur un côté extérieur.

6. Dispositif embarqué mobile (30) pour véhicule du type à selle selon l'une quelconque des revendications 1 à 5, dans lequel
l'élément de fixation de première direction (74) est adapté pour être fixé dans une direction de haut en bas, pour monter de manière amovible le couvercle (62) sur la carrosserie du véhicule, et l'élément de fixation de première direction (74) est adapté pour être desserré afin de régler le couvercle (62) autour d'un axe dans la direction de haut en bas, par rapport au châssis du véhicule (FR), et
l'élément de fixation de deuxième direction (86, 88) est adapté pour être fixé dans le sens de la largeur, pour monter de manière amovible le corps du dispositif sur le couvercle (62), et l'élément de fixation de deuxième direction (86, 88) est adapté pour être desserré afin de régler le corps du dispositif (60) autour d'un axe dans le sens de la largeur, par rapport au couvercle (62).

7. Dispositif embarqué mobile (30) pour véhicule du type à selle selon l'une quelconque des revendications 1 à 6, dans lequel le couvercle (62) recouvre la totalité du corps du dispositif (60) au moins dans une vue latérale et une vue plane.

8. Dispositif embarqué mobile (30) pour véhicule du type à selle selon l'une quelconque des revendications 1 à 8, dans lequel le dispositif embarqué mobile (30) est une lampe auxiliaire adaptée pour être disposée sur chacun des côtés gauche et droit de la carrosserie du véhicule.

9. Dispositif embarqué mobile (30) pour véhicule du type à selle selon la revendication 6, dans lequel l'élément de fixation de première direction (74) est adapté pour être inséré par le haut.
